# FASCICULE DE BREVET EUROPEEN

(11) **EP 0 479 226 B1**
(45) Date de publication et mention de la délivrance du brevet: **05.03.1997**
(21) Numéro de dépôt: 91116752.6
(22) Date de dépôt: 01.10.1991
(51) Int. Cl.: G02B 6/44

(54) **Cassette de raccordement optique**
Kassette für optische Verbindungen
Cassette for optical junction

(30) Priorité: 04.10.1990 FR 9012244
(43) Date de publication de la demande: 08.04.1992
(73) Titulaire: ALCATEL CABLE INTERFACE, F-08330 Vrigne aux Bois (FR); BULL S.A., 92800 Puteaux (FR)
(72) Inventeur: Dupont, Michel, F-08410 Boulzicourt (FR); Boyer, Jean-Pierre, F-75015 Paris (FR); Bezada, Juan, F-78280 Guyancourt (FR); Batiste, René, F-78990 Elancourt (FR)
(74) Mandataire: Weinmiller, Jürgen

(56) Documents cités:
- EP-A- 0 208 155
- EP-A- 0 281 196
- EP-A- 0 288 808

## Description

La présente invention est du domaine des télécommunications, en particulier des transmissions téléphoniques ou informatiques par voie optique. Elle s'applique au brassage des raccordements entre câbles ou équipements, réalisé dans des répartiteurs ou sous-répartiteurs.

Ce problème de brassage est déjà en tant que tel connu. Il est réalisé à l'aide de jarretières indépendantes venant assurer les raccordements souhaités au niveau de boîtes de raccordement appelées cassettes optiques. Ainsi, par exemple, on raccorde sélectivement les conducteurs d'un câble dit de transport aux conducteurs d'un ou plusieurs câbles de capacité moindre et dits câbles de distribution par un premier ensemble de cassettes optiques affecté au câble de transport, un deuxième ensemble de cassettes optiques affecté aux câbles de distribution et des jarretières entre les cassettes de ces ensembles. Ces deux ensembles de cassettes et les jarretières de raccordement constituent le répartiteur ou sous-répartiteur dans une installation de transmission téléphonique ou informatique.

Chacun des câbles est fixé à l'une des extrémités de son ensemble de cassettes. Ses joncs ou paires de conducteurs ou conducteurs individuels sont séparés les uns des autres à partir du point de fixation du câble, ils sont guidés jusqu'à la cassette concernée où ils sont laissés en légère surlongueur.

La cassette assure le stockage de la surlongueur, cette surlongueur permet l'accès au raccordement avec une jarretière, pour la mise en place ou une modification de raccordement.

Le brevet FR-2 573 544 notamment décrit une cassette de ce type. Cette cassette est à fond sur lequel sont définis, d'un même côté, une couronne extérieure, entre une paroi extérieure et une autre paroi plus intérieure, et une couronne intérieure, entre la paroi intérieure précitée et au moins un cyclindre central. Les couronnes servent au stockage des surlongueurs du ou des conducteurs de câble ainsi que du ou des conducteurs d'un autre câble jarretière, qui sont raccordés dans la cassette par un ou des dispositifs de raccordement sous forme de barrette de raccordement optique. Des pattes sur les bords de ces parois et du cylindre assurent la retenue des surlongueurs dans la cassette.

Avec ce type de cassette, toute intervention au niveau du dispositif de raccordement conduit à une manipulation des surlongueurs de conducteurs des deux câbles, pour la séparation des conducteurs et la modification des raccordements.

Dans la demande de brevet FR 89 16813 de la demanderesse, on a également proposé un autre type de cassette dite à double compartiment, présentant à l'une de ses extrémités une plaquette prolongeant la cassette et destinée à recevoir un bloc de connecteurs optiques. Cette cassette est affectée au stockage d'une première surlongueur et d'une deuxième surlongueur d'un même conducteur optique, ou de plusieurs, dans l'un et l'autre de ses compartiments. Chaque conducteur est immobilisé au niveau de son passage d'un compartiment à l'autre pour une manipulation de l'une des surlongueurs sans affecter l'autre rendue indépendante et restant lovée dans son propre compartiment.

Ainsi, l'une des surlongueurs sert pour l'extraction de l'une des cassettes d'un empilement de cassettes et l'autre pour une modification ou une réfection de raccordement, dans les conditions d'exploitation.

Le document EP-A-0208 155 décrit un bloc de jonction pour fibres optiques, qui est constitué par deux pièces identiques accolées face à face et qui comporte un conduit rectiligne ménagé pour moitié dans chacune des deux pièces. Deux fibres optiques insérées par les deux extrémités du conduit sont positionnées bout à bout dans la partie médiane de celui-ci.

Des éléments de retenue des fibres, qui sont constitués en deux parties appartenant aux deux pièces et s'étendent dans le conduit, assurent le maintien en place des fibres bout à bout.

Un tel bloc de jonction (qui présente des pieds de fixation permettant de l'assujetir sur une rail de support) ne permet pas une connexion démontable à souhait de l'une des fibres.

Le document EP-A-0 281 196 divulgue une cassette de raccordement d'un ou de conducteurs optiques d'un câble à un ou des connecteurs, via une ou des fibres individuelles raccordées chacune à l'un des conducteurs. Cette cassette comporte un support de base, des moyens de lovage de chaque conducteur optique et de maintien d'un raccord entre le conducteur optique et la fibre individuelle sur l'une des faces du support, une ouverture à travers le support, et des moyens de lovage de chaque fibre individuelle sur l'autre face du support. Un rebord avant le long du côté dit avant du support assure la rétention des connecteurs perpendiculairement à ce rebord.

Ces connecteurs sont orientés face à un opérateur qui intervient à ce niveau pour défaire ou refaire la connexion et peut alors recevoir le signal lumineux provenant du conducteur optique.

Le document EP-A-0 288 808 décrit une autre cassette optique. Cette cassette comporte deux compartiments, qui sont définis sur deux supports rectangulaires articulés l'un à l'autre par un premier de leur bord pour être superposables face à face ou ouvrir la cassette. Un premier compartiment est affecté au lovage d'au moins un conducteur optique d'un câble. Le deuxième compartiment sur l'autre support assure le lovage d'au moins une fibre et le maintien d'un raccord optique entre chaque fibre et chaque conducteur optique. Un couvercle est articulé sur un deuxième bord adjacent au premier du support définissant le deuxième compartiment. Un support de connecteurs est monté extérieurement sur un troisième bord opposé au premier du support de ce deuxième compartiment. Il reçoit chaque connecteur équipant chaque fibre lovée et raccordée au conducteur optique dans le deuxième compartiment.

Cette cassette est de constitution particulière. Elle n'est pas superposable avec d'autres cassettes identiques en un ensemble sur un support de fixation tout en laissant les connecteurs de l'ensemble des cassettes accessibles en face avant pour les interventions souhaitées de brassage des connexions entre deux ensembles par des jarretières.

La présente invention a pour but de simplifier au maximum les conditions d'exploitation et de rendre particulièrement aisées et rapides les éventuelles interventions de modification de raccordement et de brassage dans les répartiteurs.

Elle a pour objet une cassette de raccordement optique d'au moins un conducteur d'un câble optique à une jarretière optique correspondant à chaque conducteur, de forme globale rectangulaire et plate, présentant deux grandes faces opposées, deux petites faces opposées avant et arrière et deux petites faces opposées latérales et comportant un premier compartiment et un deuxième compartiment définis de part et d'autre d'une toile commune de séparation parallèle auxdites grandes faces, des moyens de lovage sur la toile dans le premier compartiment, des moyens de rétention sur la petite face avant d'un connecteur constitué de deux demi-connecteurs enfichables de raccordement déconnectable de la jarretière et du conducteur de câble, et des moyens de fixation sur la petite face arrière, pour le montage de la cassette sur un support de maintien, les parties desdites petites faces de part et d'autre de la toile constituant les petites faces correspondantes de l'un et l'autre des compartiments et ledit premier compartiment présentant au moins une ouverture d'accès dans sa petite face arrière pour recevoir et lover intérieurement une surlongueur du conducteur du câble et ayant ses autres petites faces sensiblement fermées, caractérisée en ce que ledit deuxième compartiment est ouvert sur toute sa petite face avant, pour le libre stockage dans celui-ci d'une surlongueur de la jarretière, et en ce que lesdits moyens de rétention dudit connecteur sont constitués par un élément support extérieur à ladite cassette, fixé de manière amovible dans un logement avant sur la toile, ledit élément support de connecteur étant agencé de façon à assurer le maintien dudit connecteur parallèlement à ladite petite face avant de la cassette, sur l'extérieur de celle-ci, et présentant une ailette formant obstacle dans la petite face avant ouverte du deuxième compartiment, ledit premier compartiment présentant au moins une ouverture dans sa petite face avant pour le raccordement du conducteur du câble à la jarretière par le connecteur extérieur à la cassette et monté sur ledit élément support.

Selon une autre caractéristique, le raccordement de chaque jarretière au conducteur de câble correspondant est effectué par un cordon optique lové dans le premier compartiment et un raccord optique formant connexion fixe entre le conducteur du câble et ledit cordon, et la cassette comporte un emplacement défini sur la toile dans le premier compartiment et formé par des nervures à encoches de positionnement et des pattes de serrage pour la retenue de chaque raccord optique, ledit cordon optique étant par ailleurs équipé de l'un des demi-conducteurs.

Selon une autre caractéristique les moyens de montage et de fixation de la cassette sont constitués par deux jeux verticaux de plusieurs pattes élastiques d'encliquetage, chacune à dent terminale intérieure et levier d'actionnement extérieur, sur la face arrière de la cassette, qui sont adaptés au montage possible de la cassette sur une ferme du type rail rectiligne, ou de profilé en U et à encoches sur ses branches à un pas multiple de celui entre les pattes d'encliquetage de chaque jeu.

Avantageusement en outre, ledit deuxième compartiment présente sur celle correspondante des grandes faces de la cassette des excroissances latérales sur les deux jeux de pattes d'encliquetage, pour un guidage en aveugle et l'actionnement manuel résultant des seuls leviers sur les jeux de pattes d'encliquetage de la cassette concernée.

Les caractéristiques et avantages de la présente invention apparaîtront clairement au cours de la description détaillée faite ci-après d'un mode préféré de réalisation donné à titre d'exemple et illustré dans les dessins ci-annexés. Dans ces dessins :
- la figure 1 et la figure 2 sont deux vues schématiques en perspective d'une cassette de raccordement optique selon l'invention, illustrée montée sur deux rails support différents,
- la figure 3 est une vue de dessus de cette cassette,
- la figure 4 est une vue de sa face avant,
- la figure 5 est une vue de dessous de cette cassette,
- la figure 6 est une vue de sa face arrière,
- la figure 7 est une vue agrandie du détail VII de la figure 5,
- la figure 8 est une vue selon les flèches VIII-VIII de la figure 7,
- les figures 9 à 12 sont différentes vues, de côté, de face, de dessous et en perspective, données à échelle agrandie par rapport aux figures précédentes, d'un élément support monté amovible sur la face avant de la cassette.

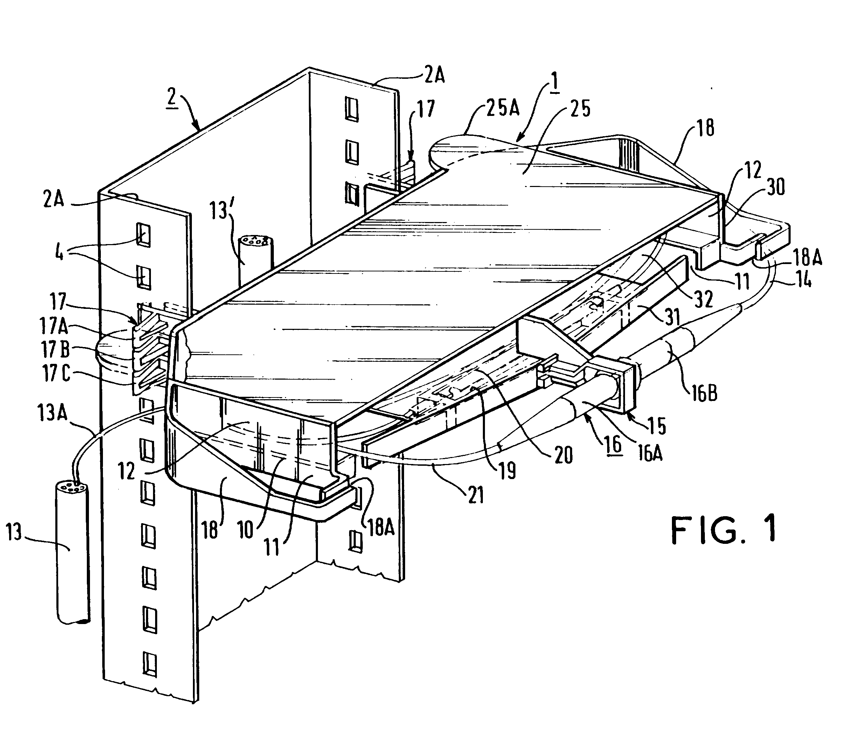

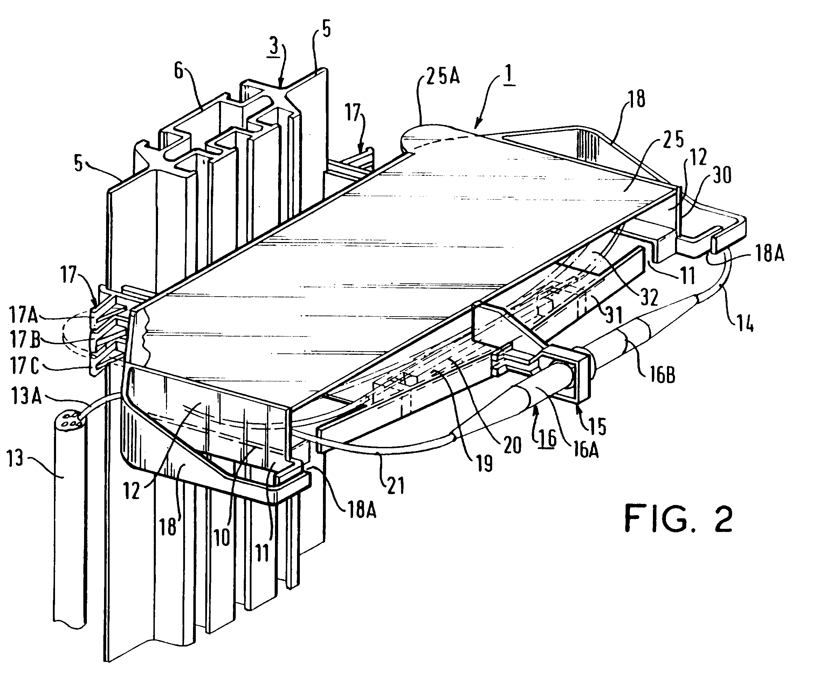

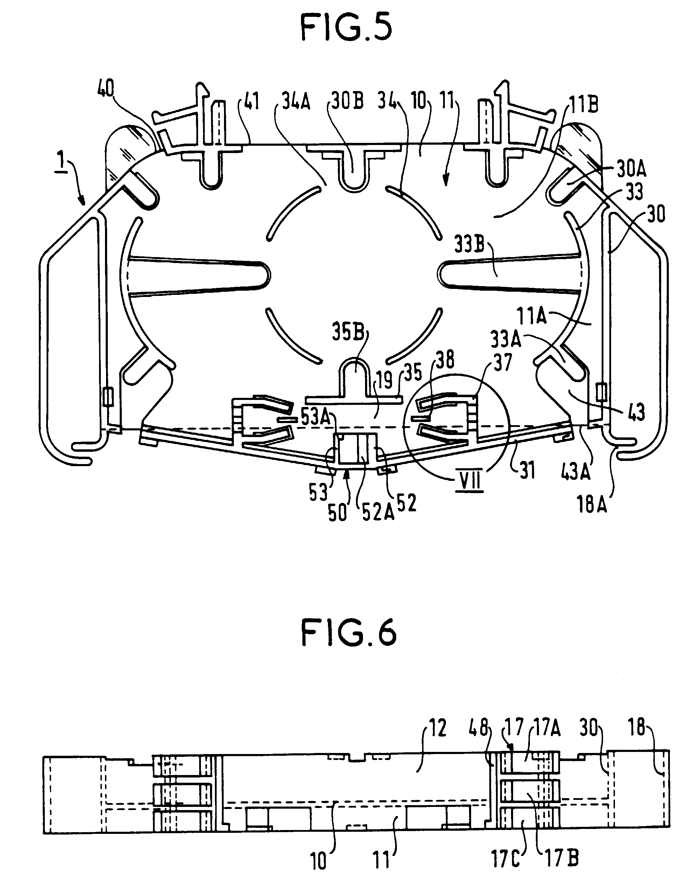

La cassette de raccordement optique selon la présente invention est désignée globalement par la référence 1. Elle est montée horizontalement indifféremment sur une ferme 2 ou une ferme 3, de deux types différents, comme représenté dans les figures 1 et 2.

Sur l'une ou l'autre des fermes 2 et 3, la seule cassette 1 représentée et d'autres cassettes qui lui sont identiques sont maintenues individuellement en formant ensemble un empilement de cassettes les unes sur les autres.

Dans un répartiteur ou un sous-répartiteur un premier jeu de cassettes et un deuxième jeu de cassettes montées sur une même ferme ou une paire de fermes sont affectées à un premier câble optique et à un deuxième câble optique et /ou à des équipements. Des jarretières optiques assurent le brassage des raccordements entre conducteurs optiques individuels des deux câbles et/ou équipements.

La cassette 1 est décrite globalement en regard des figures 1 et 2, dans ses conditions d'utilisation pour lesquelles elle est horizontale. Elle est à double compartiment 11 et 12, définis de part et d'autre d'une toile horizontale de séparation 10, sensiblement médiane. Le compartiment inférieur 11 est affecté au stockage d'une réserve de longueur d'un conducteur 13A de câble 13. Le compartiment supérieur 12 est affecté au stockage d'une réserve de longueur d'un conducteur jarretière 14 à raccorder au conducteur 13A. Bien entendu plusieurs conducteurs de câble et plusieurs conducteurs de jarretière peuvent être lovés dans leurs compartiments respectifs 11 et 12 et raccordés les uns aux autres. Leur nombre reste cependant limité à quelques unités, ce sont en en particulier la paire de conducteurs d'une ligne du câble à raccorder à deux conducteurs de jarretière.

Cette cassette 1 peut être utilisée en la considérant retournée sur elle-même, c'est-à-dire avec le compartiment 11 dit inférieur devenant le compartiment supérieur et le compartiment 12 devenant le compartiment inférieur, mais sans inversion de ses deux faces avant et arrière. On note que cette cassette 1 peut aussi bien être montée verticalement sur une ferme 2 ou 3 alors horizontale, sa face avant d'intervention étant alors verticale.

Cette cassette 1 reçoit un élément support 15 pour un connecteur 16, sur sa face avant. Elle comporte sur sa face arrière un dispositif 17 d'encliquetage sur la ferme 2 en U, ou sur la ferme 3 de profilé rectiligne. Elle comporte en outre latéralement deux anneaux 18 de passage des jarretières desservant un empilement de cassettes, avec une ouverture 18A sur l'avant de chaque anneau pour la sortie de la jarretière pour la cassette concernée.

Un emplacement 19 d'accrochage d'un raccord optique 20 est en outre prévu sur la face inférieure de la toile 10, dans le compartiment inférieur 11. Ce raccord optique 20 relie le conducteur 13A du câble 13 de préférence à un cordon optique 21 lové avec ce conducteur 13A dans le compartiment 11. Le cordon 21 est par ailleurs raccordé sur la face avant de la cassette à la jarretière 14 par le connecteur avant 16.

Avantageusement le cordon 21 et la jarretière 14 sont initialement équipés des deux demi-connecteurs 16A, 16B par exemple complémentaires et enfichables l'un dans l'autre, sur leurs extrémités à raccorder l'une à l'autre, pour un raccordement aisé et rapide sur le site d'exploitation. Ce connecteur 16 est d'accès immédiat sur la face avant de la cassette et ne nécessite pas l'extraction de la cassette de son empilement, pour sa mise en place ou toute modification de connexion réalisée. Il constitue une connexion démontable dite de brassage des raccordements.

Le raccord optique 20 est quant à lui réalisé sur site juste avant la mise en place de la cassette dans son empilement. Ce raccord optique constitue une connexion fixe et définitive, ne donnant lieu à aucune modification ultérieure, sauf cas exceptionnel.

Dans le mode préféré de réalisation donné, la cassette est de hauteur de 24 mm. Elle est constituée de trois pièces moulées qui sont :
- un corps défini par la toile 10, avec les deux compartiments 11 et 12 de part et d'autre d'elle, les anneaux latéraux 18 et le dispositif d'encliquetage arrière 17,
- l'élément 15, support de connecteur, monté amovible sur la face avant du corps,
- un couvercle 25 rapporté et fixé par exemple par clip sur la face supérieure du compartiment supérieur 12.

Dans cette réalisation préférée, le dispositif d'encliquetage 17 est formé par deux jeux verticaux de trois pattes d'encliquetage 17A, B, C. Il permet le montage de la cassette sur la ferme 2 en U dont les branches 2A sont à encoches 4, au pas de 16 mm entre elles, ou sur la ferme 3 dont le profilé rectiligne est à deux ailettes latérales 5 et partie médiane nervurée 6.

Ainsi, dans un empilement de cassettes sur la ferme 2 en U, les cassettes individuelles sont alternativement retenues par leurs deux pattes terminales d'encliquetage 17A, 17C, pour l'une des cassettes, et par leur patte médiane d'encliquetage 17B, pour la cassette adjacente, qui sont engagées dans les encoches correspondantes de chaque branche 2A du profilé en U.

Avec cette ferme 2 en U, le câble peut tout aussi bien arriver latéralement ou par l'intérieur du U à l'arrière de l'empilement de cassettes, comme illustré par le câble 13 ou un autre câble 13'.

Dans un empilement de cassettes sur la ferme 3, les cassettes successives sont retenues par leurs deux jeux de pattes sur les bords des ailettes latérales 5 du profilé rectiligne.

Avantageusement, le couvercle 25 du compartiment supérieur 12 présente deux excroissances arrière 25A s'étendant sensiblement de part et d'autre des deux jeux de pattes du dispositif 17, en étant sensiblement à niveau avec la patte supérieure 17A.

Ainsi qu'il ressort également des figures 1 et 2, la toile 10 présente un rebord périphérique 30 saillant sur l'une et l'autre de ses deux faces, à l'exception du bord avant de sa face supérieure. Ce rebord périphérique délimite les deux compartiments 11 et 12, il ferme la face avant 31 du compartiment inférieur mais laisse ouverte toute la face avant 32 du compartiment supérieur 12. Ces deux faces avant 31, 32 des compartiments forment la face avant d'intervention de la cassette dans ses conditions d'exploitation. Seul l'élément 15 support du connecteur 16 vient faire obstacle dans la face avant du compartiment 12, quand il est en place, et retient la surlongueur de jarretière 14 stockée dans ce compartiment 12.

D'une manière générale, on note en outre que la cassette est légèrement plus longue que large et que ses deux coins arrière sont tronqués et forment des transitions arrondies entre ses petits côtés latéraux et son côté arrière. Elle est entièrement symétrique, de part et d'autre du plan vertical qui la coupe en son milieu.

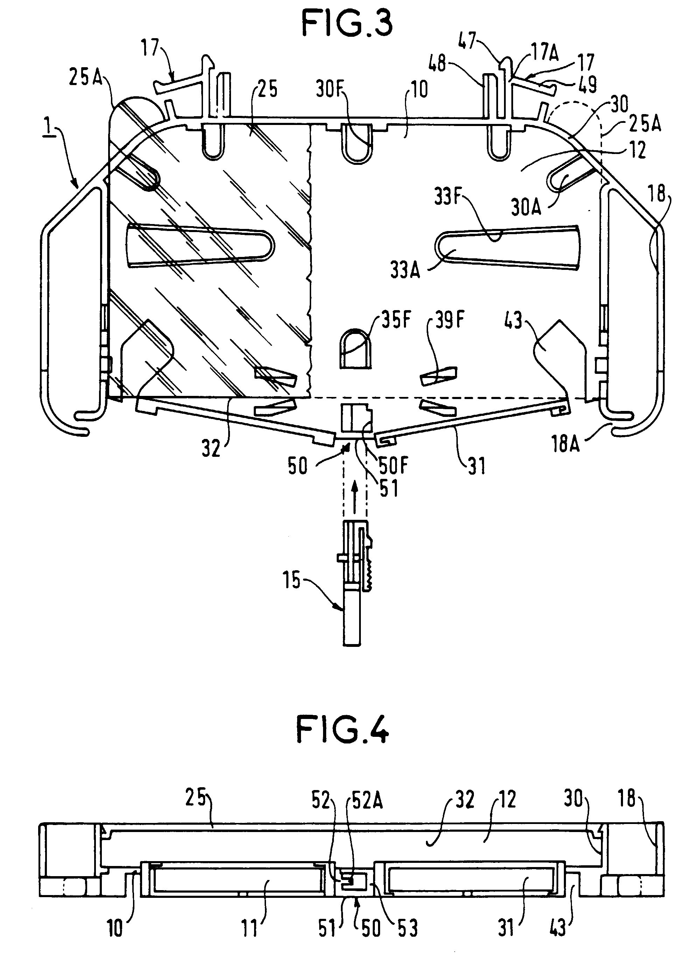

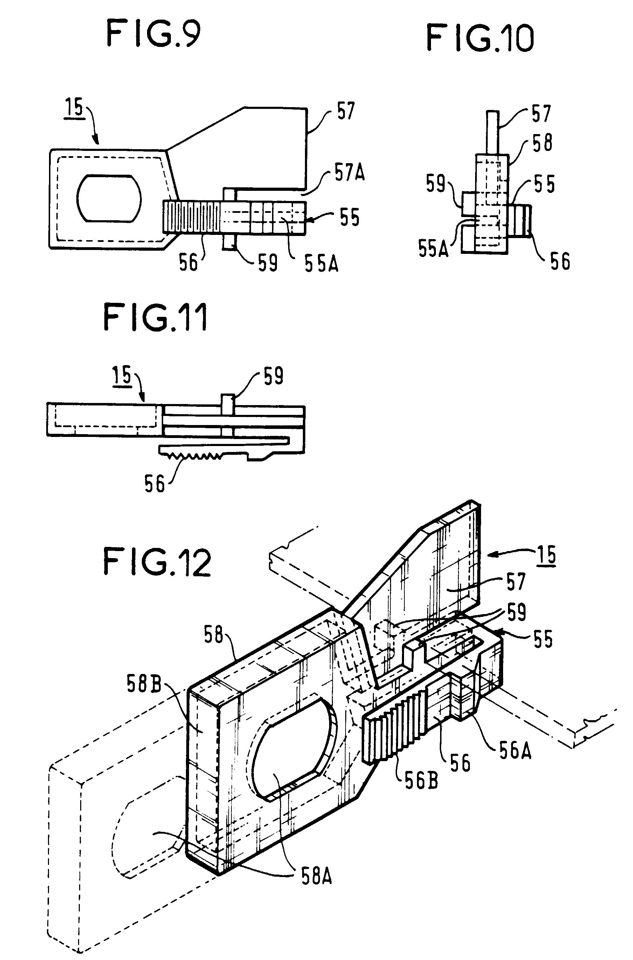

La réalisation détaillée de la cassette est complétée plus particulièrement en regard des figures 3 à 8 en ce qui concerne son agencement propre et des figures 9 à 12 en ce qui concerne l'élément 15 support de connecteur qu'elle reçoit. Dans ces figures les éléments déjà cités ci-avant sont désignés sous les mêmes références et ne sont que précisés, le cas échéant.

Le compartiment supérieur 12 ne comporte aucune partie intérieure saillante sur la face supérieure de la toile 10. Le rebord périphérique 30 saillant qui la délimite est continu sur les deux côtés latéraux et le côté arrière de ce compartiment. La surlongueur de jarretière 14 est stockée en boucle libre dans ce compartiment et n'est retenue que par l'élément 15 support du connecteur avant 16, quand cet élément 15 est en place sur la face avant de la cassette.

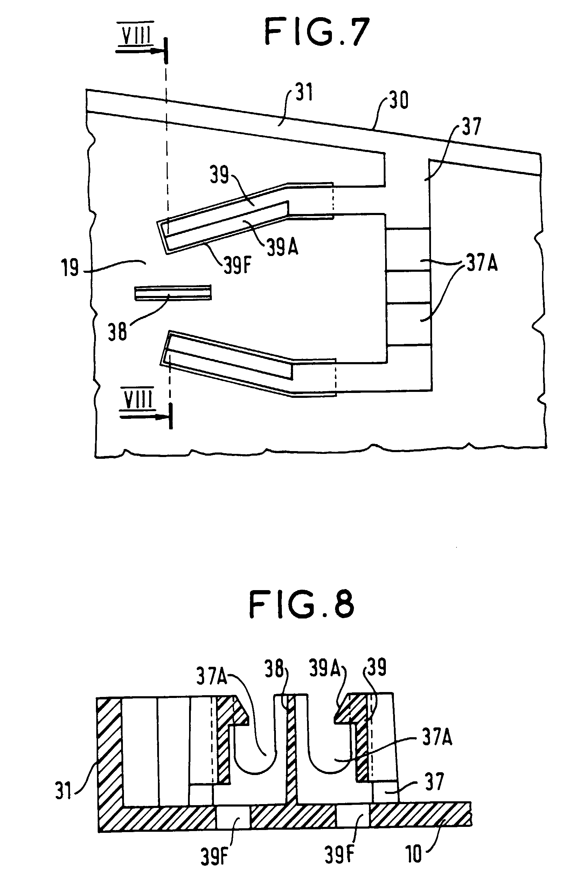

Pour le compartiment inférieur 11 (figure 5), outre le rebord périphérique 30 qui le délimite et définit ses quatre parois de manière non continue, la toile 10 présente une pluralité de nervures saillantes s'étendant sur la même hauteur que ses parois. Ce sont d'une part deux nervures latérales arquées 33, relativement proches des parois latérales, quatre nervures centrales arquées 34, formant ensemble une partie cylindrique centrale à encoches 34A définies entre les nervures 34 et centrées en regard des quatre parois, et une nervure longitudinale avant 35 entre la partie cylindrique centrale et la paroi avant. Ce sont d'autre part deux petites nervures transversales avant 37, délimitant entre elles, la paroi avant et la nervure 35 l'emplacement avant précité 19 pour un ou plusieurs raccords optiques 20, et des petites nervures terminales 38 dans cet emplacement 19.

Les nervures latérales 33 et les parois latérales délimitent entre elles des canaux latéraux 11A dans le compartiment 11. Ces nervures 33 et les quatre nervures centrales 34 délimitent entre elles une couronne intérieure 11B, communiquant avec les canaux 11A et permettant avec ceux-ci le lovage convenable des surlongueurs de chaque conducteur de câble 13A et chaque cordon 21 concernés dans le compartiment 11 de cette cassette.

Ces nervures et les parois latérales et arrière du compartiment 11 comportent des pattes 30A et 33A, s'étendant transversalement sous les canaux 11A, et des pattes 30B, 33B et 35B s'étendant transversalement sous la couronne 11 au droit des encoches 34A, pour la retenue des surlongueurs lovées dans le compartiment 11.

Des ouvertures 40 et 41 dans la paroi arrière du compartiment 11 définissent de chaque côté de l'un et l'autre des deux jeux de pattes d'encliquetage du dispositif 17 deux accès possibles d'entrée correspondant à l'arrivée latérale arrière ou centrale arrière du câble.

Pour l'obtention de place suffisante, pour l'emplacement 19 et la partie attenante de la couronne 11B ainsi que pour un logement 50 de maintien et fixation de l'élément 15 support de connecteur avant, la toile 10 et donc le compartiment 11 sont renflés dans leur partie médiane avant.

L'emplacement 19 est précisé en se référant à cette figure 5 et plus particulièrement aux figures 7 et 8. Il est montré agencé pour recevoir et retenir deux raccords optiques réalisés entre deux conducteurs de câble et deux cordons optiques.

A cet effet, les nervures transversales 37 présentent chacune deux encoches 37A qui sont encadrées par une paire de pattes élastiques 39. Les pattes élastiques 39 s'étendent en biais vers l'intérieur du logement, leurs extrémités arrivant en regard de la nervure terminale 38 correspondante. Elles sont à bord intérieur 39A chanfreiné, formant une dent terminale saillante en regard de l'intérieur de chaque encoche 37A par ailleurs encadrée par la nervure 38.

Le raccord optique positionné dans l'une des encoches 37A se trouve ainsi bloqué contre la nervure 38 par l'une des pattes 39. Bien entendu ce logement peut être adapté pour ne recevoir qu'un seul raccord optique ou pour recevoir plus de deux raccords optiques. Des cales d'appui, non représentées, peuvent en outre être laissées dans le logement 19 en regard des encoches 37A, pour chaque raccord optique positionné au fond d'une paire d'encoches et également maintenu contre ces cales.

On note en outre, en correspondance avec les différentes pattes obtenues de moulage sur les nervures (figure 5), que la toile 10 présente des fenêtres multiples notées par la référence numérique de la patte concernée accompagnée de la lettre F (figure 3). L'une de ces fenêtres à chaque extrémité du bord avant de la toile est identifiée différemment par la référence 43. Cette fenêtre 43, plus importante que la patte 33A sur les nervures 33, assure la mise en communication des compartiments et définit une ouverture avant 43A du compartiment 11, pour la sortie du ou des cordons optiques avec leur demi-connecteur terminal.

Le dispositif d'encliquetage arrière 17 est quant à lui précisé en regard des figures 3 ou 5 et 6, avec les figures 1 et 2.

Il est formé par les deux jeux de trois pattes élastiques d'encliquetage présentant chacune une dent terminale 47 saillante sur leur face intérieure tournée vers le plan de symétrie de la cassette. Il comporte en outre une patte intérieure rigide 48, de butée, associée à chaque jeu de pattes 17A, 17B, 17C, continue sur la hauteur du jeu et légèrement écartée de lui. Le bord arrière de cette patte de butée est en retrait sur les dents terminales 47 et est chanfreiné en regard des dents terminales.

Cet agencement permet la retenue de la cassette sur la ferme 2, dont les branches du U s'insèrent entre le jeu de pattes d'encliquetage et la patte de butée jusqu'à que les dents terminales 47 rentrent dans les encoches 4 correspondantes. Il permet aussi la retenue de cette cassette sur la ferme 3 dont les bords des ailettes 5 s'insèrent entre les dents terminales et le bord arrière de la patte de butée 48.

Les pattes d'encliquetage 17A à C présentent en outre une excroissance importante 49 sur la face extérieure de chacune d'elles, formant levier d'actionnement de la patte élastique d'encliquetage qui la porte. Ce levier 49 est utilisé pour la mise en place de la cassette sur la ferme, mais surtout pour le dégagement des dents terminales des encoches de la ferme 2 et l'extraction de la cassette.

L'excroissance 25A laissée à chaque extrémité du bord arrière du couvercle 25 vient latéralement sensiblement juste au dessus de la patte supérieure d'encliquetage 17A de chaque jeu. Elle permet à l'opérateur de venir positionner en aveugle son doigt sur les seuls leviers d'actionnement des pattes d'encliquetage de la cassette concernée, pour leur désencliquetage.

Les figures 3 à 5 montrent en outre le logement 50 défini sur la face avant de la cassette pour la fixation de l'élément 15 support de connecteur avant et les figures 9 à 12 cet élément 15.

Ce logement 50 est défini par une ouverture centrale 51 dans la paroi avant 31 du compartiment inférieur 11 et deux nervures 52 et 53 de guidage et maintien de l'élément 15. Ces deux nervures 52 et 53 appartiennent à la toile 10 comme les autres nervures du compartiment 11. Elles s'étendent depuis les deux bords latéraux de l'ouverture 50 vers le logement 19 précité du raccord 20, qu'elles limitent à l'avant de la cassette. L'une de ces nervures, 52, présente une arête intérieure horizontale 52A, à mi hauteur et sur la longueur de cette nervure. L'autre nervure 53 présente sur sa face intérieure des sillons 53A formés sur sa hauteur et définissant une ou des parties épaulées successives depuis l'ouverture pour le blocage de l'élément 15.

L'élément 15 support de connecteur avant 16 comporte, sur sa partie dite arrière en regard de la cassette, un doigt 55 flanqué d'une patte élastique 56, pour son montage et sa fixation dans le logement 50, et une ailette 57 au-dessus du doigt et sensiblement sur sa longueur. Cette ailette 57 est séparée du doigt 55 par une fente 57A. Elle est par ailleurs de même hauteur que le compartiment supérieur 12 et vient faire obstacle dans sa face avant 32 quand l'élément 15 est en place.

Cet élément 15 comporte sur son autre partie, dite avant, un support proprement dit, 58, présentant un trou 58A ou deux trous identiques comme suggéré par l'option en pointillés, ou encore deux rangées de trous identiques, pour le ou plusieurs connecteurs reçus et retenus dans ces trous. Ce support 58 est solidaire du doigt et de l'ailette.

Le doigt 55 a une rainure 55A sur sa face opposée à celle en regard de la patte élastique 56. Cette rainure 55A est guidée sur l'arête 52A du logement 50.

La patte élastique 56, solidaire du bout du doigt, s'étend par ailleurs légèrement distante du doigt, sur sa longueur. Elle a sa face extérieure présentant une dent d'encliquetage 56A pour son blocage sur la nervure épaulée 53. Sa partie terminale libre est de préférence à petites rainures multiples 56B pour une meilleure préhension à la main et son actionnement, à la mise en place et l'extraction de l'élément 15 de son logement 50.

Un bossage 59, de part et d'autre de la rainure 55A et en bout de la fente 57A, forme une butée d'arrêt sur les bords de l'ouverture 50, quand l'élément 15 est en place et retenu dans son logement. Dans ces conditions, l'arrière de l'ailette 57 est juste inséré sous le couvercle dans le compartiment supérieur 12, la partie terminale de la patte élastique 56 reste extérieure et accessible à l'avant du compartiment inférieur 11.

Dans la réalisation illustrée, la rainure 55A du doigt est ouverte dans la face correspondante en creux de la partie support 58, dont la seule périphérie est maintenue d'épaisseur comparable à la largeur du doigt. La tranche avant 58B de cette patte support est alors utilisée pour recevoir une étiquette d'identification des raccordements effectués.

De manière comparable, la paroi avant du compartiment inférieur est également avantageusement utilisée pour l'identification de la cassette et reçoit d'un côté ou de l'autre du logement 50 une étiquette d'identification de cassette.

Les opérations successives de mise en oeuvre de cette cassette de raccordement optique sont indiquées ci-après, en considérant qu'on dispose au départ de cordons optiques 21 équipés à l'une de leurs extrémités d'un demi-connecteur individuel 16A et de jarretières 14 équipées à chacune de leurs extrémités d'un demi-connecteur individuel 16B.

Ces opérations consistent alors à :
- réaliser l'épissure de l'extrémité du conducteur 13A du câble 13 et l'extrémité libre du cordon optique 21, faite à l'extérieur de la cassette et donnant lieu au raccord optique précité 20,
- déposer le raccord optique 20 dans son emplacement 19 de la cassette,
- fixer la cassette sur la ferme, éventuellement empilée au-dessus ou au dessous d'autres cassettes déjà montées, en résorbant la surlongueur de conducteur de câble et la quasi-totalité du cordon optique dans le compartiment inférieur 11,
- lover en boucle la jarretière, la repousser dans le compartiment supérieur 12 et la maintenir en encliquetant l'élément 15 support de connecteur avant sur la cassette,
- insérer l'un des demi-connecteurs 16A, 16B dans son support 15 et y raccorder l'autre demi-connecteur.

En exploitation, une modification des raccordements réalisés est immédiate et aisée. Elle consiste simplement à défaire les connexions au niveau des connecteurs avant 16 concernés en déconnectant les demi-connecteurs 16A et 16B, à retirer les longueurs nécessaires des jarretières lovées dans le compartiment 12, puis à refaire des connexions souhaitées et relover les excès de longueur des jarretières.

## Revendications

1. Cassette (1) de raccordement optique d'au moins un conducteur (13A) d'un câble optique (13) a une jarretière optique (14) correspondant à chaque conducteur, de forme globale rectangulaire et plate, présentant deux grandes faces opposées, deux petites faces opposées avant et arrière et deux petites faces opposées latérales et comportant un premier compartiment (11) et un deuxième compartiment (12) définis de part et d'autre d'une toile commune de séparation (10) parallèle auxdites grandes faces, des moyens de lovage (33-35) sur la toile dans le premier compartiment (11), des moyens de rétention (15) sur la petite face avant d'un connecteur (16) constitué de deux demi-connecteurs (16A) enfichables de raccordement déconnectable de la jarretière et du conducteur de câble, et des moyens de fixation (17) sur la petite face arrière, pour le montage de la cassette (1) sur un support de maintien (2;3), les parties desdites petites faces de part et d'autre de la toile constituant les petites faces correspondantes de l'un et l'autre des compartiments et ledit premier compartiment (11) présentant au moins une ouverture d'accès (40) dans sa petite face arrière pour recevoir et lover intérieurement une surlongueur du conducteur (13A) du câble et ayant ses autres petites faces sensiblement fermées, caractérisée en ce que ledit deuxième compartiment (12) est ouvert sur toute sa petite face avant, pour le libre stockage dans celui-ci d'une surlongueur de la jarretière (14), et en ce que lesdits moyens de rétention (15) dudit connecteur (16) sont constitués par un élément support extérieur à ladite cassette, fixé de manière amovible dans un logement avant (50) sur la toile, ledit élément support de connecteur (15) étant agencé de façon à assurer le maintien dudit connecteur (16) parallèlement à ladite petite face avant de la cassette, sur l'extérieur de celle-ci, et présentant une ailette (57) formant obstacle dans la petite face avant ouverte du deuxième compartiment (12), ledit premier compartiment (11) présentant au moins une ouverture (43A) dans sa petite face avant pour le raccordement du conducteur du câble à la jarretière par le connecteur (16) extérieur à la cassette et monté sur ledit élément support (15).

2. Cassette selon la revendication 1, caractérisée en ce que ledit logement (50) est défini entre deux nervures transversales de guidage (52, 53) sur la toile (10) dans ledit premier compartiment, sensiblement dans sa partie avant médiane, et présente une fenêtre d'accès (51) dans la face avant dudit premier compartiment, entre les deux nervures transversales de guidage, et en ce que ledit élément support (15) comporte un doigt de fixation (55, 56) reçu dans ledit logement (50), le doigt (55) et les deux nervures de guidage (52, 53) présentant des moyens de guidage et de rétention complémentaires (55A, 56 ; 52A, 53A).

3. Cassette selon la revendication 2, caractérisée en ce que ledit doigt (55) est flanqué d'une patte élastique (56), insérée avec lui dans ledit logement et guidée le long de l'une des nervures de guidage (52, 53), cette nervure et la patte élastique du doigt portant lesdits moyens de rétention complémentaires sur leurs faces correspondantes.

4. Cassette selon la revendication 3, caractérisée en ce que les moyens de guidage dudit doigt (55) et le logement (50) comportent une rainure (55A) et une arête ( 52A) correspondante, l'une sur le doigt (55) et l'autre sur l'autre nervure de guidage (52).

5. Cassette selon l'une des revendications 2 à 4, caractérisée en ce que ledit élément support (15) comporte un support proprement dit (58), prolongeant ledit doigt (55) et présentant au moins un trou (58A) de retenue de chaque connecteur (16).

6. Cassette selon la revendication 5, caractérisé en ce qu'elle comporte en outre deux nervures transversales avant (37) sur la toile dans le premier compartiment (11) et deux encoches en vis-à-vis (37A) dans lesdites nervures, définissant un emplacement avant (19) de montage et de retenue d'un raccord optique (20) dans ledit premier compartiment, parallèlement à la petite face avant dudit premier compartiment, ledit raccord constituant une connexion fixe du conducteur de câble (13A) à un cordon optique (21), ledit cordon optique ayant l'une de ses extrémités pré-équipée de l'un desdits demi-connecteurs et l'autre de ses extrémités raccordée par ladite connexion fixe (20) au conducteur de câble (14A) et étant par ailleurs lové dans ledit premier compartiment (11).

7. Cassette de raccordement optique selon l'une des revendications 5 et 6, caractérisée en ce que lesdits moyens de fixation (17) sont constitués par deux jeux de pattes élastiques d'encliquetage (17A-17C), saillants sensiblement sur la hauteur des petites faces arrière des deux compartiments (11, 12), pour le montage sélectif de la cassette sur ledit support de maintien d'un premier ou d'un deuxième type.

8. Cassette selon la revendication 7, caractérisée en ce que les pattes d'encliquetage (17A-17C) sont chacune à dent intérieure terminale (47) tournée vers la patte d'encliquetage de même niveau de l'autre jeu, ont entre elles dans chaque jeu un pas sous multiple du pas entre des encoches (4) sur ledit support de maintien (2) prévu du premier type et formé par un rail en U, et sont saillantes sur une patte rigide intérieure (48), associée à chacun des deux jeux sur leur hauteur, pour le montage indifférent de la cassette sur ce rail (2) en U ou le support de maintien prévu du deuxième type et formé par un rail rectiligne (3).

9. Cassette selon l'une des revendications 7 et 8, caractérisée en ce que lesdites pattes d'encliquetage (17A-17C) comportent en outre chacune une excroissance extérieure (49) formant levier d'actionnement de la patte d'encliquetage qui la porte.

10. Cassette selon la revendication 9, caractérisée en ce que ledit deuxième compartiment (12) comporte, sur celle des grandes faces correspondante de la cassette, deux excroissances arrière (25A), s'étendant latéralement sur l'extérieur des deux jeux de pattes d'encliquetage (17A-17C), au niveau sensiblement de l'une des pattes d'encliquetage terminales (17A) de chaque jeu, constituant un moyen de guidage en aveugle d'actionnement au doigt des seules pattes d'encliquetage de la seule cassette concernée d'un empilement de cassettes identiques sur ledit support de maintien (2, 3), en vue de l'extraction de cette cassette concernée.

## Patentansprüche

1. Kassette (1) zum optischen Anschluß mindestens eines Lichtleiters (13A) aus einem optischen Kabel (13) an einen Verteillichtleiter (14) entsprechend jedem Lichtleiter, wobei die Kassette allgemein rechtwinklig und flach ist und zwei einander gegenüberliegende große Seiten sowie einander gegenüberliegende kleine Vorder- und Rückseiten und zwei einander gegenüberliegende weitere kleine Seiten aufweist und ein erstes (11) und ein zweites Abteil (12) zu beiden Seiten einer gemeinsamen Trennwand (10) parallel zu den großen Seiten, Mittel (33 bis 35) zum Aufschießen von Lichtleitern auf der Trennwand im ersten Abteil (11), Mittel (15) an der kleinen Vorderseite zum Festhalten eines aus zwei zusammensteckbaren Halbverbindern (16A) gebildeten Verbinders (16), um den Verteillichtleiter und den Lichtleiter des Kabels voneinander zu trennen, und Mittel (17) zur Befestigung der Kassette (1) a über ihre kleine Rückseite auf einem Träger (2, 3) besitzt, wobei die Bereiche der kleinen Seiten diesseits und jenseits der Trennwand die entsprechenden kleinen Seiten der beiden Abteile bilden und das erste Abteil (11) mindestens eine Zugangsöffnung (40) in seiner kleinen Rückseite besitzt, um eine Überlänge des Lichtleiters (13A) des Kabels aufzunehmen und innen aufzuschießen, während die anderen kleinen Seiten im wesentlichen geschlossen sind, dadurch gekennzeichnet, daß das zweite Abteil (12) über seine ganze vordere kleine Seite für die freie Lagerung einer Überlänge des Verteillichtleiters (14) offen ist und daß die Mittel (15) zum Halten des Verbinders (16) aus einem Tragelement außerhalb der Kassette bestehen, das abnehmbar in einem vorderen Sitz (50) auf der Trennwand befestigt ist, wobei das Tragelement (15) für den Verbinder auch so ausgebildet ist, daß es den Halt des Verbinders (16) parallel zu der kleinen Vorderseite der Kassette und außerhalb dieser Kassette gewährleistet, und wobei dieses Tragelement einen Flügel (57) aufweist, der in der vorderen offenen kleinen Seite des zweiten Abteils (12) ein Hindernis bildet, und daß das erste Abteil (11) mindestens eine Öffnung (43A) in seiner kleinen Vorderseite für den Anschluß des Lichtleiters des Kabels an den Verteillichtleiter über den auf dem Tragelement (15) außerhalb der Kassette montierten Verbinder (16) besitzt.

2. Kassette nach Anspruch 1, dadurch gekennzeichnet, daß der Sitz (50) zwischen zwei Querführungsrippen (52, 53) auf der Trennwand (10) im ersten Abteil im wesentlichen in dessen vorderen mittleren Bereich definiert ist und ein Zugangsfenster (51) in der Vorderseite des ersten Abteils zwischen den beiden Querführungsrippen besitzt, und daß das Tragelement (15) einen Befestigungsfinger (55, 56) aufweist, der in den Sitz (50) eingreift, wobei der Finger (55) und die beiden Führungsrippen (52, 53) zueinander komplementäre Führungsund Haltemittel (55A, 56; 52A, 53) enthalten.

3. Kassette nach Anspruch 2, dadurch gekennzeichnet, daß neben dem Finger (55) eine elastische Lasche (56) vorgesehen ist, die mit dem Finger in den Sitz eingreift und entlang einer der Führungsrippen (52, 53) geführt wird, wobei diese Rippe und die elastische Lasche des Fingers die komplementären Haltemittel an ihren entsprechenden Seiten tragen.

4. Kassette nach Anspruch 3, dadurch gekennzeichnet, daß die Mittel (55) zur Führung des Fingers und der Sitz (50) eine Rinne (55A) und eine entsprechende Kante (52A) auf dem Finger (55) bzw. auf der Führungsrippe (52) aufweisen.

5. Kassette nach einem der Ansprüche 2 bis 4, dadurch gekennzeichnet, daß das Tragelement (15) einen eigentlichen Träger (58) in Verlängerung des Fingers (55) aufweist, der mindestens ein Loch (58A) zum Halten jedes Verbinders (16) enthält.

6. Kassette nach Anspruch 5, dadurch gekennzeichnet, daß sie weiter zwei vordere Querrippen (37) auf der Zwischenwand im ersten Abteil (11) und zwei in den Rippen einander gegenüberliegende Ausschnitte (37A) enthält, die einen vorderen Raum (19) für die Montage und den Halt eines optischen Anschlusses (20) im ersten Abteil parallel zur kleinen Vorderseite des ersten Abteils definieren, wobei der Anschluß eine feste Verbindung des Lichtleiters des Kabels (13A) mit einer Lichtleiterschnur (21) bildet, die an einem ihrer Enden vorab mit einem der Halbverbinder versehen ist, während das andere Ende über die feste Verbindung (20) an den Lichtleiter des Kabels (14A) angeschlossen ist und im übrigen im ersten Abteil (11) aufgeschossen ist.

7. Kassette nach einem der Ansprüche 5 und 6, dadurch gekennzeichnet, daß die Befestigungsmittel (17) von zwei Sätzen von elastischen Rastlaschen (17A, 17B, 17C) gebildet werden, die im wesentlichen über die Höhe der kleinen rückwärtigen Seiten der beiden Abteile (11, 12) vorstehen, um die Kassette selektiv auf dem Halteträger eines ersten oder zweiten Typs montierten zu können.

8. Kassette nach Anspruch 7, dadurch gekennzeichnet, daß die Rastlaschen (17A, 17B, 17C) je einen inneren Zahn (47) am Ende besitzen, der zur Rastlasche in der gleichen Höhe wie im anderen Satz hinweist, daß die Rastlaschen in jedem Satz einen Achsabstand besitzen, der ein Untervielfaches des Achsabstands zwischen den Ausschnitten (4) in dem als U-Schiene ausgebildeten Halteträger (2) des ersten Typs aufweist und über eine starre innere Lasche (48) vorsteht, die jedem der beiden Sätze über deren Höhe zugeordnet ist, um die Kassette auf der U-Schiene oder dem vorgesehenen Halteträger des zweiten Typs zu montieren, der von einer geradlinigen Schiene (3) gebildet wird.

9. Kassette nach einem der Ansprüche 7 und 8, dadurch gekennzeichnet, daß die Rastlaschen (17A, 17B, 17C) außerdem je eine äußere Verlängerung (49) aufweisen, der einen Betätigungshebel für die von ihm getragene Rastlasche bildet.

10. Kassette nach Anspruch 9, dadurch gekennzeichnet, daß das zweite Abteil (12) auf seiner der großen Seite der Kassette entsprechenden Seite zwei rückwärtige Verlängerungen (25A) aufweist, die sich seitlich über die Außenseite der beiden Sätze von Rastlaschen (17A, 17B, 17C) in Höhe einer der Endrastlaschen (17A) jedes Satzes erstrecken und Führungsmittel für die blinde Betätigung der Rastlaschen nur der betroffenen Kassette innerhalb eines Stapels von identischen Kassetten auf dem Halteträger (2, 3) mit dem Finger bilden, um diese betroffene Kassette entnehmen zu können.

## Claims

1. An optical connection cassette (1) which is generally rectangular and flat in overall shape, for connecting at least one conductor (13A) of an optical cable (13) to an optical jumper (14) corresponding to each conductor, the cassette presenting two opposite large faces. two opposite small faces constituting a front face and a rear face, and two opposite small side faces, and including a first compartment (11) and a second compartment (12) defined on either side of a common separation web (10) parallel to said large faces, coiling down means (33-35) on the web in the first compartment (11), retention means (15) on the small front face for retaining a connector (16) constituted by two interfitting half-connectors (16A) for releasably connecting the jumper and the cable conductor, and fixing means (17) on the small rear face for mounting the cassette (1) on a support (2, 3), the portions of said small faces on either side of the web constituting the corresponding small faces of each of the compartments, and said first compartment (11) presenting at least one access opening (40) in its small rear face for receiving and coiling down internally excess length of the conductor (13A) of the cable and having its other small faces substantially closed, the cassette being characterized in that said second compartment (12) is open over its entire small front face for storing freely therein excess length of the jumper (14), and in that said retention means (15) for retaining said connector (16) are constituted by a support piece outside said cassette, fixed in removable manner in a front housing (50) on the web, said connector support piece (15) being organized in such a manner as to ensure that said connector (16) is held parallel to said small front face of the cassette, on the outside thereof, and presenting a fin (57) forming an obstacle in the open small front face of the second compartment (12), said first compartment (11) presenting at least one opening (43A) in its small front face for connecting the conductor of the cable to the jumper via the connector (16) outside the cassette and mounted on said support piece (15).

2. A cassette according to claim 1, characterized in that said housing (50) is defined between two transverse guide grooves (52, 53) on the web (10) in said first compartment, substantially in the middle front portion thereof and having an access window (51) in the front face of said first compartment between the two transverse guide ribs, and in that said support piece (15) includes a fixing finger (55, 56) received in said housing (50), the finger (55) and the two guide ribs (52, 53) having complementary guide means and retention means (55A, 56; 52A, 53A).

3. A cassette according to claim 2, characterized in that said finger (55) is flanked by a resilient tab (56) inserted together therewith in said housing and guided along one of the guide ribs (52, 53), said rib and the resilient tab of the finger carrying said complementary retention means on their corresponding faces.

4. A cassette according to claim 3, characterized in that the guide means for guiding said finger (55) in the housing (50) include a groove (55A) and a corresponding edge (52A), one being on the finger (55) and the other being on the other guide rib (52).

5. A cassette according to any one of claims 2 to 4, characterized in that said support piece (15) includes a support per se (58) extending said finger (55) and having at least one retaining hole (58A) for each connector (16).

6. A cassette according to claim 5, characterized in that it further includes two transverse front ribs (37) on the web in the first compartment (11) and two pairs of facing gaps (37A) in said ribs, defining a front emplacement (19) for mounting and retaining an optical coupling (20) in said first compartment, parallel to the small front face of said first compartment, said coupling constituting a fixed connection of the cable conductor (13A) to an optical lead (21), said optical lead having one of its ends prefitted with one of said half-connectors and the other of its ends connected by said fixed connection (20) to the cable conductor (14A) and, in addition, being coiled down in said first compartment (11).

7. An optical connection cassette according to claim 5 or 6, characterized in that said fixing means (17) are constituted by two sets of snap-fastening resilient tabs (17A-17C) projecting over substantially the entire height of the small rear faces of the two compartments (11, 12) for selectively mounting the cassette on said support of a first type or of a second type.

8. A cassette according to claim 7, characterized in that each of the snap-fastening tabs (17A-17C) has an inwardly directed terminal catch (47) facing the snap-fastening tab at the same level in the other set, with the pitch between tabs in each of the sets being a submultiple of the pitch of gaps (4) on the said support (2) which is of the first type and constituted by a channel section rail, with each set being associated with an outwardly projecting inner rigid tab (48) extending up the full height thereof, thereby enabling the cassette to be mounted either on said channel section rail (2) or else on the support which is of the second type and formed by a rectilinear rail (3).

9. A cassette according to claim 7 and 8, characterized in that said snap-fastening tabs (17A-17C) also include respective outwardly directed projections (49) constituting levers for actuating the corresponding snap-fastening tabs.

10. A cassette according to claim 9, characterized in that said second compartment (12) has two rear projections (25A) from the corresponding one of the large faces of the cassette and extending on the outsides of each of the two sets of snap-fastening tabs (17A-17C), substantially level with an end one of the snap-fastening tabs (17A) in each of the sets, the projections constituting blind guidance means for fingers to actuate only those snap-fastening tabs that correspond to a given cassette in a stack of identical cassettes on a common support (2, 3), in order to extract said given cassette.
